# EUROPEAN PATENT SPECIFICATION

(11) **EP 2 466 301 B1**
(45) Date of publication and mention of the grant of the patent: **27.05.2020**
(21) Application number: 11186375.9
(22) Date of filing: 24.10.2011
(51) Int. Cl.: G01N 30/86

(54) **Chromatogram display method, data processing device, analysis device, and display program**
Chromatogrammanzeigeverfahren, Datenverarbeitungsvorrichtung, Analyseverfahren und Anzeigeprogramm
Procédé d'affichage de chromatogramme, dispositif de traitement de données, dispositif d'analyse et programme d'affichage

(30) Priority: 26.10.2010 JP 2010239978
(43) Date of publication of application: 20.06.2012
(73) Proprietor: ARKRAY, Inc., Minami-ku Kyoto-shi Kyoto 601-8045 (JP)
(72) Inventor: Sugiyama, Koji, Kyoto 602-0008 (JP)
(74) Representative: MacDougall, Alan John Shaw

(56) References cited:
- EP-A2- 0 701 137
- JP-A- H0 244 249
- JP-A- 10 090 242
- US-A1- 2003 110 000
- SATO T ET AL: "AN ECONOMICAL, HIGH PERFORMANCE CHROMATOGRAPHIC DATA PROCESSOR", INTERNATIONAL LABORATORY, INTERNATIONAL SCIENTIFIC COMMUNICATIONS, SLOUGH, GB, vol. 15, no. 4, 1 May 1985 (1985-05-01), pages 98-100,102,1, XP000718980, ISSN: 0010-2164

## Description

### Technical Field

The present invention relates to a chromatogram display method, a data processing device, an analysis device and a display program.

### Background Art

In the case where a sample is analyzed by separation analysis such as liquid chromatography, a chromatogram is created based on the analysis data obtained. A chromatogram shows the types and amounts of components contained in a sample. Therefore, various display methods (e.g., JP 3848985 B) have been proposed from the viewpoint of clearly determining the presence/absence and an amount of a target object of measurement from a chromatogram.

On the other hand, the HbAlc test (HPLC method) using HbA1 as a treatment marker for diabetes, and the hemoglobin fraction test (HPLC method, electrophoresis method) using hemoglobin fractions as diagnosis markers for β-thalassemia, sickle cell anemia, and the like are known as exemplary practical applications of separation analysis in the medical diagnosis field, particularly in the laboratory test field.

By performing such a measurement, a ratio of an amount of a fraction of a target object with respect to the total amount of hemoglobin (for example, the HbAlc fraction in the case where HbAlc is measured; the HbA2 fraction and the HbF fraction in the case of β-thalassemia; and the HbS fraction in the case of sickle cell anemia) is determined as a measurement value, and not only the measured value but also a chromatogram obtained which has important implications as clinical information.

JP H02 44249 A (HITACHI LTD), published Feb. 14th, 1990, discloses a processor-implemented method for displaying a chromatogram having the scale of the time axis altered according to peak width in order to improve visibility.

### Summary of the Invention

### Problem to be Solved by the Invention

In the separation analysis, as its characteristic, the later a fraction appears, the broader bandwidth it has. Particularly, in a precision analysis in which many fractions are separated, the part of an obtained chromatogram corresponding to the latter part of the measurement tends to be spread out and redundant. As a result, fractions having greater bandwidths, irrespective of their significances, occupy a major part of the chromatogram, and the visual impression of the same is alienated from the significances of these fractions as clinical information in some cases.

The present invention provides a novel method for displaying a chromatogram with improved visibility.

### Means to Solve the Problem

The present invention relates to a method for displaying a chromatogram based on analysis data of a target object in a sample, the chromatogram having a time axis as a horizontal axis, the method including displaying a chromatogram in which the scale of the time axis for a predetermined time period is altered.

More particularly, the present invention is a processor-implemented method as defined in Claim 1 of the appended claims. Also provided is a data processing device as defined in Claim 12, an analysis device as defined in Claim 13, and a chromatogram display program as defined in Claim 15.

### Effects of the Invention

With the present invention, a chromatogram with improved visibility can be displayed.

### Brief Description of the Drawings

Certain preferred embodiments of the present disclosure will now be described in greater detail by way of example only and with reference to the accompanying drawings in which:
[FIG. 1] FIG. 1 is a flowchart showing a method for displaying a chromatogram according to the First Embodiment as described;
[FIG. 2] FIGS. 2A and 2B show exemplary chromatograms according to the First Embodiment as described: FIG. 2A shows an exemplary chromatogram before the scale of the time axis is altered; FIG 2B shows an exemplary chromatogram after the scale of the time axis is altered;
[FIG. 3] FIG. 3 is a flowchart showing a method for displaying a chromatogram according to the Second Embodiment as described;
[FIG. 4] FIG. 4 is a functional block diagram illustrating an exemplary configuration of an analysis device used in the Second Embodiment as described;
[FIG. 5] FIG. 5 is a functional block diagram illustrating an exemplary configuration of a chromatogram creation section and exemplary data recorded in a recording section;
[FIG. 6] FIGS. 6A and 6B show exemplary chromatograms according to the Second Embodiment as described;
[FIG. 7] FIGS. 7A and 7B show other exemplary chromatograms according to Second Embodiment;
[FIG. 8] FIGS. 8A and 8B show still other exemplary chromatograms according to the Second Embodiment as described;
[FIG. 9] FIG. 9 is a flowchart showing a method according to the invention for displaying a chromatogram according to the Third Embodiment as described; and
[FIG. 10] FIGS. 10A and 10B show exemplary chromatograms according to the Third Embodiment as described.

### Detailed Description of the Invention

In the present specification, the "sample" refers to a sample prepared from a sample material. Examples of the sample materials include biological samples containing components derived from a living body. The sample material is preferably a material containing the above-described target object, and more preferably, a sample containing hemoglobin. Examples of the biological sample include, but not limited to, blood, blood-derived materials containing erythrocyte components, saliva, and cerebrospinal fluid. Blood is, for example, blood sampled from a living body, preferably blood of an animal, more preferably blood of a mammal, and further preferably blood of a human. The blood-derived material containing erythrocyte components is, for example, a material that is separated or prepared from blood and contains erythrocyte components, and examples of the same include, but not limited to, a fraction of blood cells obtained by removing plasma, a concentrate of blood cells, freeze-dried blood or blood cells, a hemolyzed sample obtained by hemolyzing whole blood, centrifuged blood, blood samples obtained through spontaneous sedimentation, and washed blood cells.

Examples of the "target object" referred to in the present specification include proteins, substances in bodies, substances in blood, etc., which are examples of components derived from a living body. Examples of the protein include hemoglobins, albumins, and globulins. Examples of the hemoglobin include glycated hemoglobin, mutant hemoglobin, and modified hemoglobin.; more specifically, examples of the same include hemoglobin A0 (HbA0), hemoglobin A1a (HbA1a), hemoglobin A1b (HbA1b), hemoglobin A1c (HbAlc), hemoglobin A2 (HbA2), hemoglobin S (HbS, sickle cell hemoglobin), hemoglobin F (HbF, fetal hemoglobin), hemoglobin M (HbM), hemoglobin C (HbC), hemoglobin D (HbD), hemoglobin E (HbE), met-hemoglobin, carbamylated hemoglobin, and acetylated hemoglobin. Examples of HbAlc include stable HbAlc (s-HbA1c), and unstable HbAlc. HbAlc refers to hemoglobin having glucose bonded to an N terminal of a β chain thereof, and preferably refers to stable HbAlc. Specific examples of the substances in living bodies and the substances in blood include bilirubin, hormones, and metabolic substances. Examples of hormones include, but not limited to, thyroid-stimulating hormone, adrenocorticotropic hormone, human-chorionic gonadotropin, insulin, glucagon, adrenal medullary hormone, epinephrine, norepinephrine, androgen, estrogen, progesterone, aldosterone, and cortisol.

In the present specification, a "chromatogram" refers to a chromatogram that is created based on analysis data and that has a time axis as a horizontal axis, which is, for example, a pictorial display of analysis data obtained by analyzing a sample. A chromatogram preferably includes at least one peak of a fraction selected from the group consisting of HbAla fraction, HbAlb fraction, unstable HbAlc fraction, stable HbAlc fraction, HbA0 fraction, HbA2 fraction, HbF fraction, HbD fraction, HbE fraction, HbS fraction, and HbC fraction. The chromatogram is preferably measurement information obtained by separation analysis. In the present specification, the "separation analysis" refers to a method for performing analysis while individually separating target objects contained in a sample; examples of the separation analysis include, but are not limited to, liquid chromatography, gas chromatography, electrophoresis, and electrochromatography, among which high performance liquid chromatography (HPLC) or capillary electrophoresis (CE) is preferred. Examples of the high precision liquid chromatography include cation exchange chromatography, anion exchange chromatography, partition chromatography, reversed-phase partition chromatography, and gel filtration chromatography. Examples of the capillary electrophoresis include capillary zone electrophoresis, capillary isotachophoresis, capillary isoelectric focusing electrophoresis, capillary electrokinetic chromatography, and capillary gel electrophoresis. It should be noted that a "chromatogram" in the present specification can be interpreted as an "electropherogram" in the case where the separation analysis is capillary electrophoresis.

In the present specification, "altering the scale of the time axis in a predetermined time period" refers to increasing or decreasing the scale of the time axis as compared with the scale in a time period other than the predetermined time period. When a unit interval of the scale of the time axis in a time period other than the predetermined time period is assumed to be 1, alerting the unit interval of the scale of the time axis in a predetermined time period may implicate also, for example, reducing the unit interval of the scale of the time axis in the predetermined time period to less than 1, and the scale can be decided appropriately according to the degree of visibility required. The scale is altered so that the unit interval is reduced to, for example, 2/3 or less, or alternatively, 1/2 or less; in some cases, it is preferably reduced to 2/3 or less, and more preferably reduced to 1/2 or less.

### [Chromatogram Display Method]

The present invention relates to a method for displaying a chromatogram based on analysis data of a target object in a sample, the chromatogram having a time axis as a horizontal axis, the method including displaying a chromatogram in which the scale of the time axis for a predetermined time period is altered. According to the display method of the present invention, since a chromatogram in which the scale of the time axis for a predetermined time period is alerted is displayed, the visibility for a target object, for example, can be improved. The present invention also achieves an effect of displaying measurement results of the target object in more suitable conditions.

The method for displaying a chromatogram according to the present invention includes detecting peaks from a chromatogram created based on the analysis data; determining presence/absence of an arbitrary fraction by referring to the detected peaks; and deciding a scale of the time axis and a time period for which the scale is altered, in accordance with results of the determination of the presence/absence of the fraction. This makes it possible to, for example, display measurement results of a target object in more suitable conditions.

Examples of the arbitrary fraction include a HbAla fraction, HbAlb fraction, unstable HbAlc fraction, stable HbAlc fraction, HbA0 fraction, HbA2 fraction, HbF fraction, HbD fraction, HbE fraction, HbS fraction, and HbC fraction, and the arbitrary fraction may be one type of these or two or more types of these. The arbitrary fraction subjected to the above-described determination may be decided according to the purpose of the analysis/measurement. In the case of a β-thalassemia patient, a peak derived from HbA2 fraction and a peak derived from HbF fraction are detected normally. Therefore, in the case of the measurement with respect to a β-thalassemia patient or a patient with suspected β-thalassemia, the arbitrary fraction is preferably HbA2 fraction, and more preferably HbA2 fraction and HbF fraction. In the case of a sickle cell anemia patient, a peak derived from HbS fraction is detected. Therefore, in the case of a sickle cell anemia, the arbitrary fraction is preferably HbS fraction. These may be used in combination, of course.

The scale of the time axis and the time period for which the scale is altered may be decided appropriately according to the type of the fraction to be detected and the position of the peak thereof. The time period for which the scale is altered may be a time period in the latter half of measurement, or a time period that includes a peak derived from an arbitrary fraction; and preferably it is a time period that includes a peak derived from an arbitrary fraction. The time period in the latter half of measurement is, for example, a time period later than the midpoint of the total measurement time. In the case where the total measurement time is 5 minutes, the time period in the latter half of measurement is, for example, a time period after 2.5 minutes have elapsed since the start of the measurement, and in the case where the total measurement time is 10 minutes, the time period concerned is, for example, a time period after 5 minutes have elapsed since the start of the measurement.

The vertical axis of a chromatogram indicates an intensity. The intensity may be, for example, an absorbance, a transmittance, an intensity of fluorescence, an index of refraction, or a detected voltage value. Alternatively, the axis may indicate another intensity determined other than those described above.

In the method for displaying a chromatogram according to the present invention, a chromatogram is displayed in which output values indicated by the intensity axis in a predetermined time period are corrected according to the scale of the time axis. This can further improve the visibility regarding the target object. The correction of the output values indicated by the intensity axis is performed as follows: when a fraction area on a chromatogram decreases due to alteration of the scale, a tendency of increasing output values is imparted; and contrarily, when the fraction area increases, a tendency of decreasing output values is imparted.

Further, the correction of output values indicated by the intensity axis are performed with reference to the relationship between an area of peaks included in the time period for which the scale is altered, and an area of the peaks before the alteration of the scale. In this case, it is possible to substantially equalize the areas before and after the alteration of the scale of the time axis, and the correction of output values is performed preferably by using a correction formula derived from the relationship regarding before and after the alteration of the scale of the time axis.

Displaying a chromatogram can be performed by at least one selected from the group consisting of, for example, printing by a printer, display on a monitor, and electrical output. Examples of electrical output include electrical output via a communication port, via an I/O port, via an electronic medium, and wireless communication.

Analysis data are preferably data obtained by detecting means selected from the group consisting of transmittance measurement, fluorescence measurement, refractive index measurement, electrochemical measurement, and mass spectrometry.

### [Data Processing Device]

The present invention in another aspect relates to a data processing device including a chromatogram creation section for creating a chromatogram in which the scale of the time axis for a predetermined time period is altered, based on analysis data of a target object in a sample; and a chromatogram output section for outputting the obtained chromatogram. With the data processing device according to the present invention, a chromatogram having improved visibility can be obtained easily.

The chromatogram creating section detects peaks from a chromatogram created based on analysis data, determines presence/absence of an arbitrary fraction by referring to the detected peaks, decides a scale of the time axis and a time period for which the scale is altered, in accordance with the determination results, and creates a chromatogram having the scale of the time axis for the predetermined time period altered based on the decision. With this, it is possible to, for example, display measurement results of a target object in more suitable conditions.

The chromatogram creation section further corrects output values indicated by the intensity axis in a predetermined period, in accordance with the scale of the time axis. Since output values are corrected, the visibility for a target object can be improved further. The correction of the output values indicated by the intensity axis is performed as follows: when a fraction area on a chromatogram decreases due to alteration of the scale, a tendency of increasing output values is imparted; and contrarily, when the fraction area increases, a tendency of decreasing output values is imparted. It is thus possible to correct an area of peaks included in a time period for which the scale is altered, by correcting output values based on an area of peaks before the alteration of the scale of the time axis, and output values are corrected so that the area concerned becomes substantially equal to the area of the peaks before the alteration of the scale of the time axis. Further, the correction of output values indicated by the intensity axis may be performed by, for example, using a correction formula derived from the relationship regarding before and after the scale of the time axis is altered.

The chromatogram output section may be, for example, a printer, a liquid crystal display device, or an organic electroluminescence display device; alternatively, it may be a communication port, an I/O port, or an electronic medium that performs electrical output.

The data processing device according to the present invention may include a recording section for recording, for example, an arbitrary fraction whose peak is to be detected; the scale of the time axis and/or the time period for which the alteration is performed, in accordance with the determination results about the presence/absence of the arbitrary fraction; and the correspondence relationship between the arbitrary fraction and the scale of the time axis and/or the time period for which alteration is performed.

### [Analysis Device]

The present invention in still another aspect relates to an analysis device that includes: a measurement section that analyzes a target object in a sample and obtains analysis data; a chromatogram creation section that creates a chromatogram based on the analysis data of the target object in the sample; and a chromatogram output section that outputs the obtained chromatogram, wherein the chromatogram creation section alters the scale of the time axis for a predetermined time period in the chromatogram. With the analysis device according to the present invention, a chromatogram with improved visibility can be obtained easily.

The chromatogram creation section detects peaks from a chromatogram created based on the analysis data obtained by the measurement section, determines presence/absence of an arbitrary fraction by referring to the detected peaks, and decides a scale of the time axis and a time period for which the scale is altered, in accordance with results of the determination of the presence/absence of the fraction.

In the analysis device of the present invention, the chromatogram creation section and the chromatogram output section are identical to those of the above-described data processing device. Further, the analysis device of the present invention may include the above-described recording section.

### [Chromatogram Display Program]

The present invention in still another aspect relates to a non-transitory computer-readable recording medium storing a chromatogram display program for causing a processor to execute output of a chromatogram based on analysis data about a target object in a sample, the program causing the processor to execute the processes of determining whether or not a scale of a time axis of the chromatogram to be displayed based on the analysis data is to be altered; and outputting the chromatogram in which the scale of the time axis is altered in accordance with the determination results. With the chromatogram display program, a chromatogram with improved visibility for the garget object can be created and displayed easily. In the present invention, the above-described program may be in a form of being recorded in a recording medium, for example.

Hereinafter embodiments of the present disclosure are explained in detail, with reference to the drawings. Those explained below, however, are mere examples, and needless to say, the present invention is not limited to those.

### First Embodiment

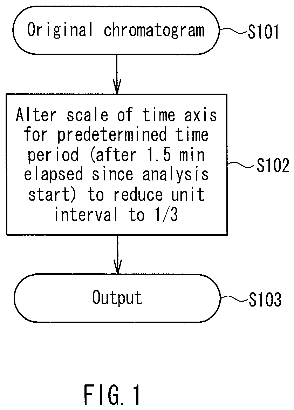

FIG. 1 is a flowchart showing a method for displaying a chromatogram according to the First Embodiment. The First Embodiment is an example in which the scale of the time axis for a time period after 1.5 minutes have elapsed since the start of analysis is altered so that the unit interval is reduced to 1/3.

A method for displaying a chromatogram according to the First Embodiment is explained with reference to the flowchart of FIG. 1. First, based on analysis data obtained, a chromatogram (hereinafter referred to as "original chromatogram" also) is created (S101). In the original chromatogram obtained, the scale of the time axis for a predetermined time period is altered (S102). Thus, a chromatogram having the scale of the time axis altered partially is output (S103). The time period for which the scale is altered is not limited particularly, and such a time period is, for example, a time period including a peak having a wide half-width, that is, a broad peak, a time period in the latter half of the measurement operation, etc. Output of the chromatogram may be, for example, printing by a printer; display on a liquid crystal display device, an organic electroluminescence display device, or the like; or electrical output via a communication port, an I/O port, an electronic medium, wireless communication, or the like.

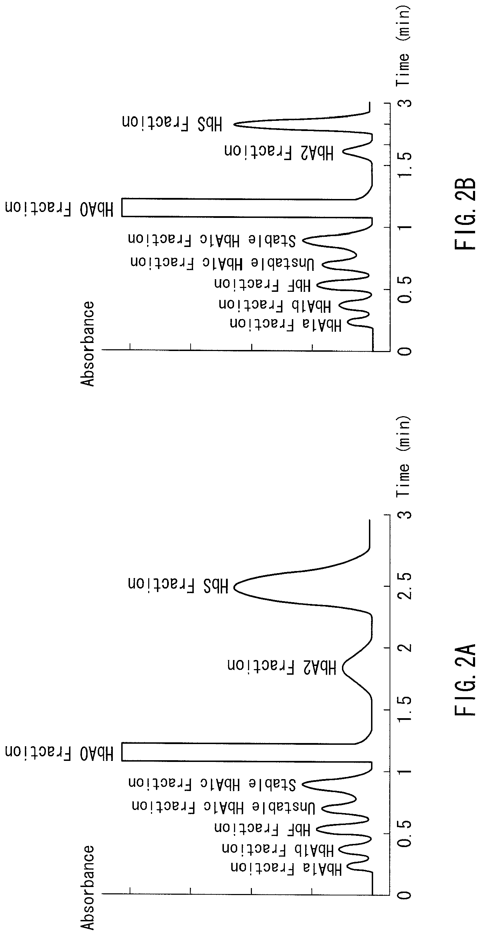

Chromatograms obtained in the First Embodiment are shown in FIG. 2. FIGS. 2A and 2B show an example in the case where the scale of the time axis for a time period after 1.5 minutes have elapsed since the start of analysis is altered so that the unit interval is reduced to 1/3. FIG. 2A shows an original chromatogram (before the scale of the time axis is altered), and FIG. 2B shows a chromatogram after the scale of the time axis has been altered. As shown in FIG. 2B, by altering the scale of the time axis for the time period after 1.5 minutes have elapsed since the start of analysis so as to reduce the unit interval to 1/3, a peak derived from an HbA2 fraction and a peak derived from an HbS fraction, which are contained in the time period for which the scale is altered, become sharp. Thus, a chromatogram with improved visibility is obtained.

### Second Embodiment

The Second Embodiment is an example in the case where peaks are detected from a chromatogram created based on analysis data, whether or not there is a peak for an arbitrary fraction among the detected peaks is determined, and the scale of the time axis is altered in accordance with the determination results.

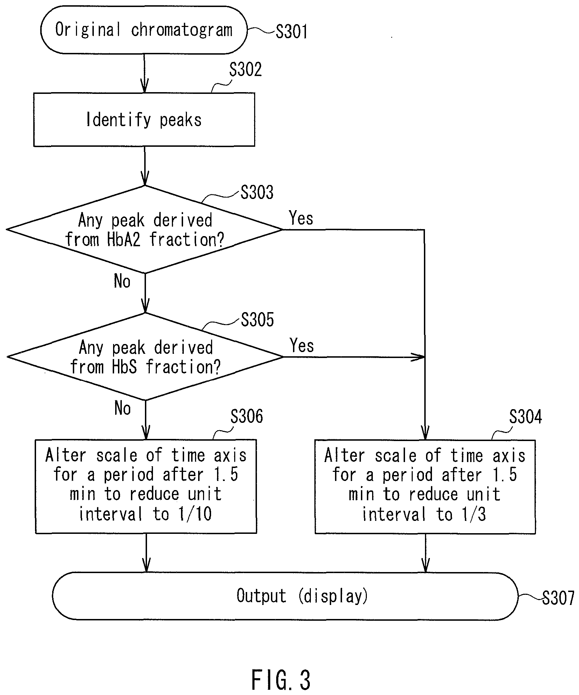

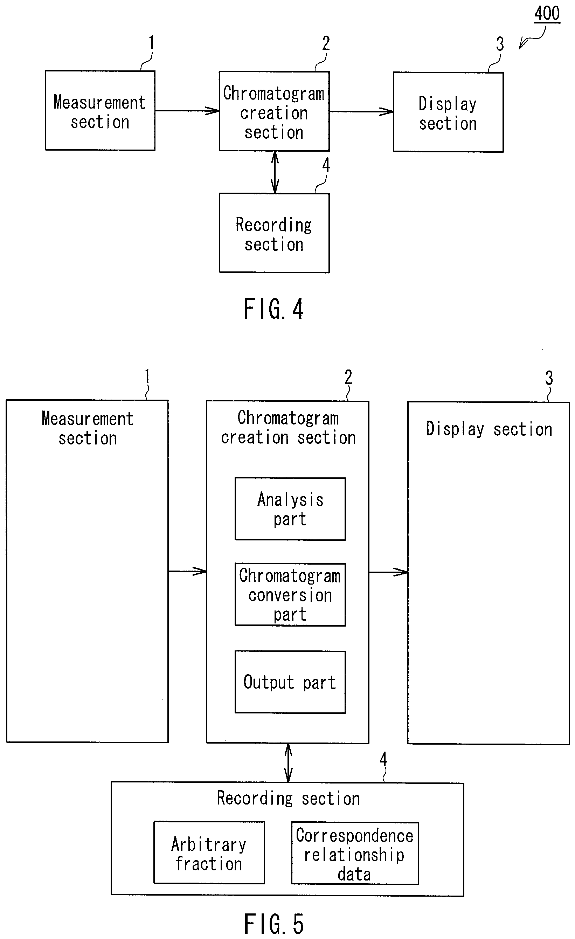

FIG. 3 is a flowchart showing a method for displaying a chromatogram according to the Second Embodiment. FIG. 4 is a functional block diagram illustrating an exemplary configuration of an analysis device used in the method for displaying a chromatogram according to the Second Embodiment. FIG. 5 is a functional block diagram illustrating an exemplary configuration of a chromatogram creation section and exemplary data to be recorded in a recording section.

An analysis device 400 shown in FIG. 4 is an analysis device using separation analysis, which separates components contained in a sample, and displays a chromatogram, based on obtained analysis data. The analysis device 400 includes a measurement section 1, a chromatogram creation section 2, a display section 3, and a recording section 4. The measurement section 1 separates target components from a sample, in accordance with analysis parameters representing separation conditions in the separation analysis, then measures separation results, and obtains analysis data. The chromatogram creation section 2 creates an original chromatogram having a time axis as a horizontal axis based on analysis data obtained from the measurement section 1. Besides, the chromatogram creation section 2 alters the scale of the time axis for a predetermined time period in the chromatogram as required. The display section 3 displays the chromatogram created by the chromatogram creation section 2.

The alteration of the scale of the time axis can be decided in accordance with, for example, results of determination about whether or not there is a peak derived from an arbitrary fraction among peaks detected from a chromatogram. In this case, an arbitrary fraction that is a criterion for the determination to be referred to when the scale of the time axis is altered, etc., can be recorded preliminarily in the recording section 4. Further, as shown in FIG. 5, as to each arbitrary fraction, which is referred to as a criterion for the determination regarding the alteration of the scale of the time axis, the following can be recorded in the recording section 4, for example: a ratio of alteration of the scale; a time period for which the scale is altered; and correspondence relationship between the arbitrary fraction and the ratio of alteration of the scale and/or the time period for which the scale is altered.

In the analysis device 400 shown in FIG. 4, the chromatogram creation section 2 can alter the scale of the time axis for a predetermined period in an original chromatogram obtained by the measurement section 1. Therefore, a chromatogram with improved visibility for a target object can be displayed.

Here, a method for displaying a chromatogram with use of the analysis device 400 shown in FIG. 4 is explained with reference to the flowchart shown in FIG. 3. The flowchart of FIG. 3 shows an exemplary case where the sample is blood, the target object is hemoglobin, and arbitrary fractions are an HbA2 fraction and an HbS fraction.

First, when a user performs an input operation at the start of measurement, the analysis device 400 starts measurement, and analysis data are obtained by the measurement section 1. The chromatogram creation section 2, receiving the obtained analysis data, creates a chromatogram (original chromatogram) based on the obtained analysis data (S301), detects peaks from the created original chromatogram, and identifies peaks (S302).

The chromatogram creation section 2 determines whether or not there is a peak derived from the preliminarily-set arbitrary fraction (for example, an HbA2 fraction) among the identified peaks (S303). The presence/absence of a peak derived from an arbitrary fraction can be determined based on, for example, an elution time, a bottom time, and optical waveform characteristics as to each peak.

When it is determined that there is a peak derived from the HbA2 fraction (Yes at S303), the chromatogram creation section 2 alters the scale of the time axis for a time period after 1.5 minutes have elapsed since the start of analysis to a predetermined scale (so as to reduce the unit interval to 1/3 in the present embodiment) (S304), and outputs a chromatogram in which the scale of the time axis is thus altered partially (S307).

When it is determined that there is no peak derived from the HbA2 fraction (No at S303), it is determined whether or not there is a peak derived from another arbitrary fraction (e.g., an HbS fraction) (S305) among the peaks recorded in the recording section 4. When it is determined that there is a peak derived from the HbS fraction (Yes at S305), the chromatogram creation section 2 alters the scale of the time axis for a time period after 1.5 minutes elapsed since the start of analysis to a predetermined scale (so as to reduce the unit interval to 1/3 in the present embodiment) (S304), and outputs a chromatogram in which the scale of the time axis is thus altered partially (S307).

When it is determined that there is no peak derived from the HbS fraction (No at S305), the chromatogram creation section 2 alters the scale of the time axis for a time period after 1.5 minutes have elapsed since the start of analysis to a predetermined scale (so as to reduce the unit interval to 1/10 in the present embodiment) (S306), and outputs a chromatogram in which the scale of the time axis is thus altered partially (S307).

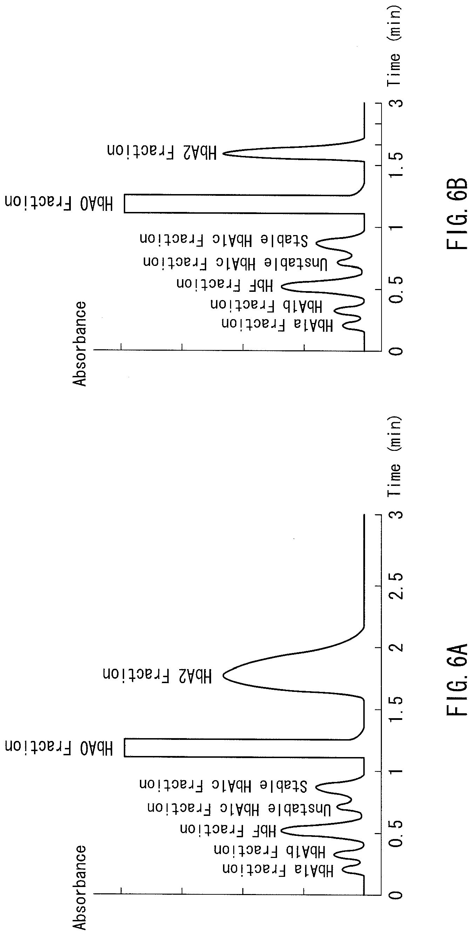

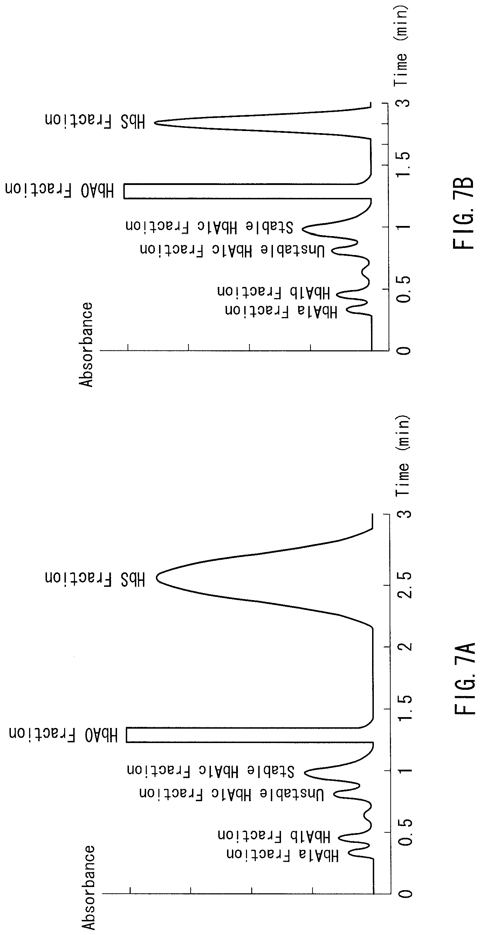

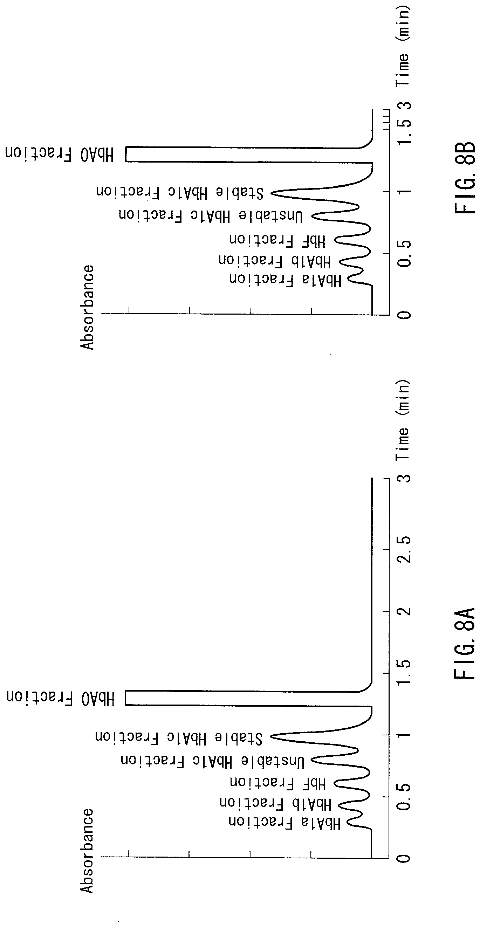

Exemplary chromatograms thus obtained are shown in FIGS. 6 to 8. FIGS. 6A and 6B show exemplary chromatograms in the case where it was determined that there is an HbA2 fraction and there is no HbS fraction (e.g., a chromatogram of a β-thalassemia patient); FIGS. 7A and 7B show exemplary chromatograms in the case where it was determined that there is no HbA2 fraction and there is an HbS fraction (e.g., a chromatogram of a sickle cell anemia patient); and FIGS. 8A and 8B show exemplary chromatograms in the case where it was determined that there is no HbA2 fraction and there is no HbS fraction (e.g., a chromatogram of a non-diseased individual). In FIGS. 6 to 8, FIGS. 6A, 7A, and 8A are original chromatograms (before the scale of the time axis is altered), and FIGS. 6B, 7B, and 8B are chromatograms after the scale of the time axis is altered.

As shown in FIGS. 6 to 8, by altering the scale of the time axis partially, a chromatogram with improved visibility is obtained. Further, by setting different ratios at which the scale is altered, respectively, for peaks included in a chromatogram, a chromatogram with further improved visibility is obtained. Displaying such a chromatogram makes it possible to derive, for example, more suitable diagnosis results from the chromatogram.

The function of the chromatogram creation section 2 shown in FIG. 4 can be realized by, for example, a general-purpose computer equipped with a CPU such as a personal computer, or a microprocessor incorporated in a measurement device, executing a predetermined program. The recording section 4 can be composed of a recording device such as a memory, a HDD, etc., that is accessible from a processor of a computer. The analysis device 400 may have such a configuration that the measurement section 1, the chromatogram creation section 2, the output section 3, and the recording section 4 are provided integrally; or alternatively, it may have such a configuration that a general-purpose computer is connected to the chromatogram creation section 2. A program for causing a computer to function as the chromatogram creation section 2, or a recording medium storing the program, is also considered to be an embodiment of the present disclosure. Further, an analysis method executed by a computer is also an aspect of the present disclosure. Here, a transitory medium, like signals per se, is not regarded as a recording medium referred to herein.

It should be noted that the present embodiment is explained with reference to an example thereof in which two types of fractions, i.e., the HbA2 fraction and the HbS fraction, are used as arbitrary fractions, but the present disclosure is not limited to this; the presence/absence of any peak may be determined as to one type of a fraction, or three or more types of fractions. Further, the present embodiment is explained with reference to an example thereof in which the scale of the time axis is altered to different scales depending on the presence/absence of fractions, but the present disclosure is not limited to this; for example, the alteration of the scale of the time axis may be performed exclusively when it is determined that there is a fraction concerned, and not performed when it is determined that there is no fraction concerned.

Further, the present embodiment is explained with reference to an example thereof in which the scale of the time axis is altered to the same scale (so that the unit interval is reduced to 1/3 or 1/10) for all of time periods for which the scale of the time axis is to be altered, but the present disclosure is not limited to this; the scale may be altered to different scales depending on periods. For example, in FIG. 6, the scale of the time axis for a time period in which a peak derived from an arbitrary fraction exists (a time period from when 1.5 minutes have elapsed to when 2.5 minutes have elapsed since the start of analysis) may be altered so that the unit interval is reduced to 1/3, and the scale of the time axis for a time period in which no peak exists (a time period after 2.5 minutes have elapsed) may be altered so that the unit interval is reduced to 1/10.

### Third Embodiment

Described as the Third Embodiment is an example according to the invention wherein peaks are detected from a chromatogram created based on the analysis data, whether or not there is any peak derived from an arbitrary fraction among the detected peaks is determined, and the scale of the temporal axis is altered in accordance with the determination results, while output values indicated by the intensity axis in the time period for which the scale is altered are corrected according to the scale of the time axis.

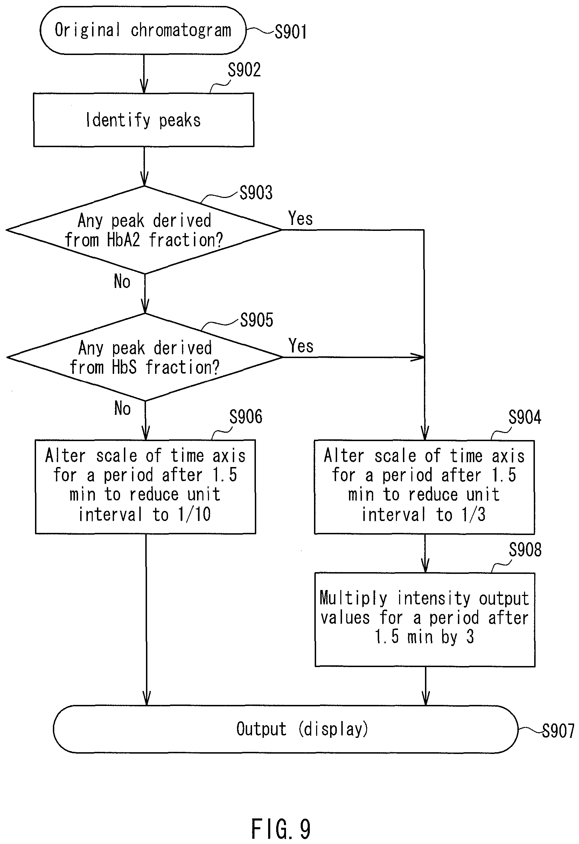

FIG. 9 is a flowchart showing a method for displaying a chromatogram according to the Third Embodiment. In FIG. 9, steps S901 to S907 can be performed in the same manner as that for the steps S301 to S307 in FIG. 3 explained in conjunction with the Second Embodiment. Hereinafter, points different from the Second Embodiment are explained mainly. In the flowchart of FIG 9 also, a case where the sample is blood, the target object is hemoglobin, and the arbitrary fractions are an HbA2 fraction and an HbS fraction is explained as an example.

The creation of a chromatogram (S901), the identification of peaks (S902), and the determination of presence/absence of an arbitrary fraction (S903, S905) are performed in the same manner as that in Second Embodiment. When it is determined that there is an arbitrary fraction (e.g., an HbA2 fraction or an HbS fraction) (Yes at S903 or S905), the chromatogram creation section 2 alters the scale of the time axis for a time period after 1.5 minutes have elapsed since the start of analysis to a predetermined scale (so as to reduce the unit interval to 1/3 in the present embodiment) (S904). Next, the chromatogram creation section 2 corrects output values indicated by the intensity axis (vertical axis) in a time period (a time period arter1.5 minutes have elapsed since the start of analysis) for which the scale of the time axis has been altered (S908), thereby outputting a chromatogram in which the scale of the time axis is altered partially and output values are corrected (S907).

The correction of output values is performed by multiplying intensity output values in the time period for which the scale of the time axis is altered, by a reciprocal of the ratio of alteration of the scale. Further, a correction formula recorded in the recording section 4 may be used.

When it is determined that there is not any peak derived from the HbA2 fraction nor any peak derived from the HbS fraction (No at S905), the chromatogram creation section 2 alters the scale of the time axis for the time period after 1.5 minutes have elapsed since the start of measurement to a predetermined scale (so as to reduce the unit interval to 1/10 in the present embodiment) (S906), and outputs of a chromatogram in which the scale of the time axis is altered partially (S907).

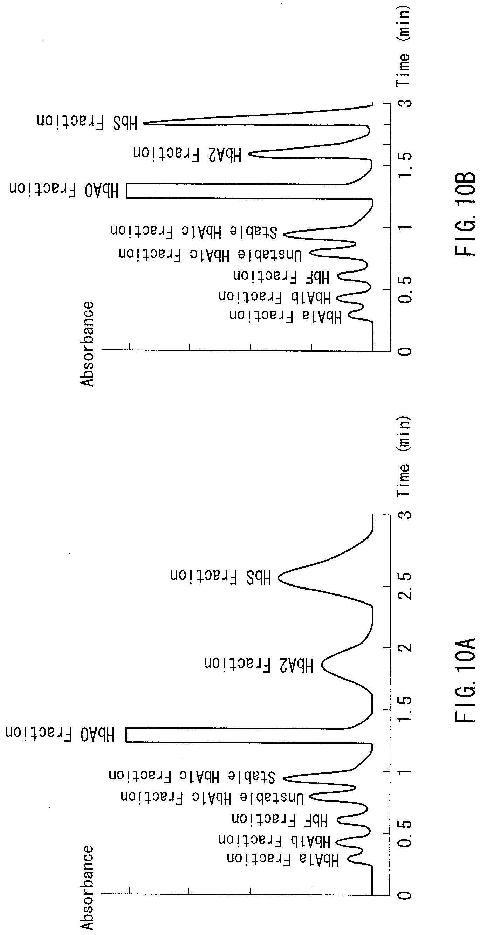

An exemplary chromatogram obtained in this way is shown in FIGS. 10A and 10B. FIGS. 10A and 10B shows an example of correcting intensities by multiplying the output values by a reciprocal, 3, of the ratio of alteration of the scale of the time axis, i.e., 1/3. FIG. 10A shows an original chromatogram (before the scale of the time axis is altered), and FIG. 10B shows a chromatogram after the scale of the time axis is altered). As shown in FIG. 10B, the scale of the time axis for a predetermined time period is altered, and output values indicated by the intensity axis are corrected, whereby a chromatogram with further improved visibility is obtained. By displaying such a chromatogram, it is possible to, for example, derive more suitable diagnostic results from the chromatogram.

### Industrial Applicability

The present invention is useful in, for example, the fields of medical diagnostic equipment, and clinical inspection equipment.

## Claims

1. A processor-implemented method for displaying a chromatogram based on analysis data of a target object in a sample, the chromatogram having a time axis as a horizontal axis and an intensity axis as its vertical axis, the method comprising:
creating a chromatogram based on the analysis data by a chromatogram creation section (2); and
displaying the chromatogram;
wherein creating the chromatogram comprises:
deciding a predetermined time period for which a scale of the time axis is to be altered, in a measurement time period of the analysis data;
altering the scale of the time axis for the predetermined time period; and
altering the scale of the intensity axis for the predetermined time period so that an area of a peak after the alteration of the scale of the time axis is equal to the area of the peak before the alteration of the scale of the time axis.

2. The method for displaying a chromatogram according to claim 1, further comprising:
detecting peaks from the chromatogram created based on the analysis data;
determining presence/absence of an arbitrary fraction by referring to the detected peaks; and
deciding the scale of the time axis and the time period for which the scale is to be altered, in accordance with results of the determination regarding the presence/absence of the fraction.

3. The method for displaying a chromatogram according to claim 2, wherein the arbitrary fraction is at least one selected from the group consisting of HbAla fraction, HbAlb fraction, unstable HbAlc fraction, stable HbAlc fraction, HbA0 fraction, HbA2 fraction, HbF fraction, HbD fraction, HbE fraction, HbS fraction, and HbC fraction.

4. The method for displaying a chromatogram according to any one of claims 1 to 3, wherein the sample contains a component derived from a living body.

5. The method for displaying a chromatogram according to any one of claims 1 to 4, wherein the sample is blood and the target object is hemoglobin.

6. The method for displaying a chromatogram according to any one of claims 1 to 5, further comprising displaying a chromatogram obtained by correcting output values indicated by the intensity axis in the predetermined time period, according to the scale of the time axis.

7. The method for displaying a chromatogram according to claim 6, wherein the correction is performed using a correction formula derived from relationship regarding before and after the alteration of the scale of the time axis.

8. The method for displaying a chromatogram according to any one of claims 1 to 7, wherein the displaying of the chromatogram includes at least one selected from the group consisting of printing of the chromatogram by a printer, display of the chromatogram on a monitor, and electrical output of the chromatogram.

9. The method for displaying a chromatogram according to any one of claims 1 to 8, wherein the chromatogram is measurement information obtained by separation analysis.

10. The method for displaying a chromatogram according to claim 9, wherein the separation analysis is selected from the group consisting of liquid chromatography, gas chromatography, electrophoresis, and electrochromatography.

11. The method for displaying a chromatogram according to any one of claims 1 to 10, wherein the analysis data are data obtained by detecting means selected from the group consisting of transmittance measurement, fluorescence measurement, refractive index measurement, electrochemical measurement, and mass spectrometry.

12. A data processing device comprising:
a chromatogram creation section (2) for creating a chromatogram in which the scale of the time axis for a predetermined time period is altered, based on analysis data of a target object in a sample; and
a chromatogram output section (3) for outputting the obtained chromatogram;
wherein the data processing device comprises a processor configured to execute the method according to any preceding claim.

13. An analysis device comprising:
a measurement section (1) for analyzing a target object in a sample so as to obtain analysis data;
a chromatogram creation section (2) for creating a chromatogram based on the analysis data of the target object in the sample; and
a chromatogram output section (3) for outputting the obtained chromatogram,
wherein the analysis device comprises a processor configured to execute the method according to any of claims 1 to 11.

14. The analysis device according to claim 13 when dependent on claim 2, wherein the chromatogram creation section (2) is configured to detect peaks from the chromatogram created based on the analysis data obtained by the measurement section (1).

15. A chromatogram display program that, when executed, causes a processor to execute the method according to any of claims 1 to 11.

## Patentansprüche

1. Prozessorimplementiertes Verfahren zum Anzeigen eines Chromatogramms auf der Basis von Analysedaten eines Zielobjekts in einer Probe, wobei das Chromatogramm eine Zeitachse als horizontale Achse und eine Intensitätsachse als vertikale Achse hat, wobei das Verfahren Folgendes beinhaltet:
Erzeugen eines Chromatogramms auf der Basis der Analysedaten durch einen Chromatogrammerzeugungsteil (2); und
Anzeigen des Chromatogramms;
wobei das Erzeugen des Chromatogramms Folgendes beinhaltet:
Entscheiden über eine vorbestimmte Zeitperiode, für die eine Skala der Zeitachse geändert werden soll, in einer Messzeitperiode der Analysedaten;
Ändern der Skala der Zeitachse für die vorbestimmte Zeitperiode; und
Ändern der Skala der Intensitätsachse für die vorbestimmte Zeitperiode, so dass ein Bereich eines Peak nach dem Ändern der Skala der Zeitachse gleich dem Bereich des Peak vor dem Ändern der Skala der Zeitachse ist.

2. Verfahren zum Anzeigen eines Chromatogramms nach Anspruch 1, das ferner Folgendes beinhaltet:
Erkennen von Peaks von dem auf der Basis der Analysedaten erzeugten Chromatogramm;
Bestimmen der An-/Abwesenheit einer willkürlichen Fraktion durch Bezugnahme auf die erkannten Peaks; und
Entscheiden über die Skala der Zeitachse und die Zeitperiode, für die die Skala geändert werden soll, anhand von Ergebnissen der Bestimmung in Bezug auf die An-/Abwesenheit der Fraktion.

3. Verfahren zum Anzeigen eines Chromatogramms nach Anspruch 2, wobei die willkürliche Fraktion wenigstens eine ist, die ausgewählt ist aus der Gruppe bestehend aus HbA1a-Fraktion, HbA1b-Fraktion, instabiler HbA1c-Fraktion, stabiler HbA1c-Fraktion, HbA0-Fraktion, HbA2-Fraktion, HbF-Fraktion, HbD-Fraktion, HbE-Fraktion, HbS-Fraktion und HbC-Fraktion.

4. Verfahren zum Anzeigen eines Chromatogramms nach einem der Ansprüche 1 bis 3, wobei die Probe eine von einem lebenden Körper abgeleitete Komponente enthält.

5. Verfahren zum Anzeigen eines Chromatogramms nach einem der Ansprüche 1 bis 4, wobei die Probe Blut ist und das Zielobjekt Hämoglobin ist.

6. Verfahren zum Anzeigen eines Chromatogramms nach einem der Ansprüche 1 bis 5, das ferner das Anzeigen eines durch Korrigieren von Ausgabewerten erhaltenen Chromatogramms beinhaltet, angezeigt durch die Intensitätsachse in der vorbestimmten Zeitperiode gemäß der Skala der Zeitachse.

7. Verfahren zum Anzeigen eines Chromatogramms nach Anspruch 6, wobei die Korrektur mit einer Korrekturformel durchgeführt wird, abgeleitet von einer Beziehung in Bezug auf vor und nach der Änderung der Skala der Zeitachse.

8. Verfahren zum Anzeigen eines Chromatogramms nach einem der Ansprüche 1 bis 7, wobei das Anzeigen des Chromatogramms wenigstens eines ausgewählt aus der Gruppe bestehend aus Drucken des Chromatogramms mit einem Drucker, Anzeigen des Chromatogramms auf einem Monitor und elektrische Ausgabe des Chromatogramms beinhaltet.

9. Verfahren zum Anzeigen eines Chromatogramms nach einem der Ansprüche 1 bis 8, wobei das Chromatogramm durch Trennanalyse erhaltene Messinformationen ist.

10. Verfahren zum Anzeigen eines Chromatogramms nach Anspruch 9, wobei die Trennanalyse ausgewählt wird aus der Gruppe bestehend aus Flüssigchromatographie, Gaschromatographie, Elektrophorese und Elektrochromatographie.

11. Verfahren zum Anzeigen eines Chromatogramms nach einem der Ansprüche 1 bis 10, wobei die Analysedaten von Detektionsmitteln erhaltene Daten sind, ausgewählt aus der Gruppe bestehend aus Transmissionsmessung, Fluoreszenzmessung, refraktiver Indexmessung, elektrochemischer Messung und Massenspektrometrie.

12. Datenverarbeitungsvorrichtung, die Folgendes umfasst:
einen Chromatogrammerzeugungsteil (2) zum Erzeugen eines Chromatogramms, in dem die Skala der Zeitachse für eine vorbestimmte Zeitperiode auf der Basis von Analysedaten eines Zielobjekts in einer Probe geändert wird; und
einen Chromatogrammausgabeteil (3) zum Ausgeben des erhaltenen Chromatogramms;
wobei das Datenverarbeitungsgerät einen Prozessor umfasst, konfiguriert zum Durchführen des Verfahrens nach einem vorherigen Anspruch.

13. Analysegerät, das Folgendes umfasst:
einen Messteil (1) zum Analysieren eines Zielobjekts in einer Probe, um Analysedaten zu erhalten;
einen Chromatogrammerzeugungsteil (2) zum Erzeugen eines Chromatogramms auf der Basis der Analysedaten des Zielobjekts in der Probe; und
einen Chromatogrammausgabeteil (3) zum Ausgeben des erhaltenen Chromatogramms,
wobei das Analysegerät einen Prozessor umfasst, konfiguriert zum Durchführen des Verfahrens nach einem der Ansprüche 1 bis 11.

14. Analysegerät nach Anspruch 13 in Abhängigkeit von Anspruch 2, wobei der Chromatogrammerzeugungsteil (2) zum Erkennen von Peaks von dem Chromatogramm konfiguriert ist, das auf der Basis der durch den Messteil (1) erhaltenen Analysedaten erzeugt wird.

15. Chromatogrammanzeigeprogramm, das bei Ausführung bewirkt, dass ein Prozessor das Verfahren nach einem der Ansprüche 1 bis 11 durchführt.

## Revendications

1. Procédé mis en œuvre par processeur pour afficher un chromatogramme sur la base de données d'analyse d'un objet cible dans un échantillon, le chromatogramme ayant un axe de temps comme étant un axe horizontal et un axe d'intensité comme étant son axe vertical, le procédé comprenant :
le fait de créer un chromatogramme sur la base des données d'analyse par une section de création de chromatogramme (2) ; et
le fait d'afficher le chromatogramme ;
la création du chromatogramme comprenant :
le fait de décider d'un laps de temps prédéterminé pour lequel une échelle de l'axe de temps doit être modifiée, dans un laps de temps de mesure des données d'analyse ;
le fait de modifier l'échelle de l'axe de temps pour le laps de temps prédéterminé ; et
le fait de modifier l'échelle de l'axe d'intensité pour le laps de temps prédéterminé de sorte qu'une aire d'une crête après la modification de l'échelle de l'axe de temps soit égale à l'aire de la crête avant la modification de l'échelle de l'axe de temps.

2. Procédé servant à afficher un chromatogramme selon la revendication 1, comprenant en outre :
le fait de détecter des crêtes à partir du chromatogramme créé sur la base des données d'analyse ;
le fait de déterminer une présence/une absence d'une fraction arbitraire en se référant aux crêtes détectées ; et
le fait de décider de l'échelle de l'axe de temps et du laps de temps pour lequel l'échelle doit être modifiée, en conformité avec des résultats de la détermination concernant la présence/l'absence de la fraction.

3. Procédé servant à afficher un chromatogramme selon la revendication 2, dans lequel la fraction arbitraire est au moins une fraction sélectionnée parmi le groupe consistant en fraction HbA1a, fraction HbA1b, fraction instable HbAlc, fraction stable HbAlc, fraction HbA0, fraction HbA2, fraction HbF, fraction HbD, fraction HbE, fraction HbS, et fraction HbC.

4. Procédé servant à afficher un chromatogramme selon l'une quelconque des revendications 1 à 3, dans lequel l'échantillon contient un composant dérivé d'un corps vivant.

5. Procédé servant à afficher un chromatogramme selon l'une quelconque des revendications 1 à 4, dans lequel l'échantillon est le sang et l'objet cible est l'hémoglobine.

6. Procédé servant à afficher un chromatogramme selon l'une quelconque des revendications 1 à 5, comprenant en outre l'affichage d'un chromatogramme obtenu par une correction des valeurs de sortie indiquées par l'axe d'intensité dans le laps de temps prédéterminé, en fonction de l'échelle de l'axe de temps.

7. Procédé servant à afficher un chromatogramme selon la revendication 6, dans lequel la correction est réalisée grâce à l'utilisation d'une formule de correction dérivée d'une relation concernant l'avant et l'après de la modification de l'échelle de l'axe de temps.

8. Procédé servant à afficher un chromatogramme selon l'une quelconque des revendications 1 à 7, dans lequel l'affichage du chromatogramme inclut au moins un élément sélectionné parmi le groupe consistant en impression du chromatogramme par une imprimante, affichage du chromatogramme sur un moniteur, et sortie électrique du chromatogramme.

9. Procédé servant à afficher un chromatogramme selon l'une quelconque des revendications 1 à 8, dans lequel le chromatogramme est une information de mesure obtenue par une analyse de séparation.

10. Procédé servant à afficher un chromatogramme selon la revendication 9, dans lequel l'analyse de séparation est sélectionnée parmi le groupe consistant en chromatographie en phase liquide, chromatographie en phase gazeuse, électrophorèse, et électrochromatographie.

11. Procédé servant à afficher un chromatogramme selon l'une quelconque des revendications 1 à 10, dans lequel les données d'analyse sont des données obtenues par des moyens de détection sélectionnés parmi le groupe consistant en mesure du facteur de transmission, mesure de fluorescence, mesure de l'index de réfraction, mesure électrochimique, et spectrométrie de masse.

12. Dispositif de traitement de données comprenant :
une section de création de chromatogramme (2) pour créer un chromatogramme dans lequel l'échelle de l'axe de temps pour un laps de temps prédéterminé est modifié, sur la base de données d'analyse d'un objet cible dans un échantillon ; et
une section de sortie de chromatogramme (3) pour effectuer la sortie du chromatogramme obtenu ;
le dispositif de traitement de données comprenant un processeur configuré pour exécuter le procédé selon n'importe quelle revendication précédente.

13. Dispositif d'analyse comprenant :
une section de mesure (1) pour analyser un objet cible dans un échantillon de sorte à obtenir des données d'analyse ;
une section de création de chromatogramme (2) pour créer un chromatogramme sur la base des données d'analyse de l'objet cible dans l'échantillon ; et
une section de sortie de chromatogramme (3) pour effectuer la sortie du chromatogramme obtenu,
le dispositif d'analyse comprenant un processeur configuré pour exécuter le procédé selon n'importe lesquelles des revendications 1 à 11.

14. Dispositif d'analyse selon la revendication 13 lorsqu'elle est dépendante de la revendication 2, dans lequel la section de création de chromatogramme (2) est configurée pour détecter des crêtes à partir du chromatogramme créé sur la base des données d'analyse obtenues par la section de mesure (1).

15. Programme d'affichage de chromatogramme qui, lorsqu'il est exécuté, oblige un processeur à exécuter le procédé selon n'importe lesquelles des revendications 1 à 11.
